# EUROPÄISCHE PATENTSCHRIFT

(11) **EP 1 980 361 B1**
(45) Veröffentlichungstag und Bekanntmachung des Hinweises auf die Patenterteilung: **16.09.2009**
(21) Anmeldenummer: 07021361.6
(22) Anmeldetag: 02.11.2007
(51) Int. Cl.: B23Q 11/08, F16P 3/06

(54) **Verbindungselement und Schutzabdeckung**
Connecting element and protective cover
Elément de raccordement et revêtement de protection

(30) Priorität: 10.04.2007 DE 102007017100
(43) Veröffentlichungstag der Anmeldung: 15.10.2008
(73) Patentinhaber: Möller Werke GmbH, 33649 Bielefeld (DE)
(72) Erfinder: Cakmak, Bülent, 33649 Bielefeld (DE); Weissberg, Wolfgang, 33604 Bielefeld (DE); Bolk, Holger, 32130 Enger (DE)
(74) Vertreter: Schober, Mirko

(56) Entgegenhaltungen:
- DE-A1- 3 027 083
- DE-U1- 8 908 608
- DE-U1- 20 220 812
- DE-U1-202004 018 318
- GB-A- 1 171 038

## Beschreibung

Die Erfindung betrifft ein Verbindungselement zum Verbinden von Segmenten einer Schutzabdeckung nach dem Oberbegriff des Anspruchs 1, wie z.B. aus der DE 20 2004 018 318U bekannt, sowie eine mit derartigen Verbindungselementen gebildete Schutzabdeckung.

Entsprechende Schutzabdeckungen und Verbindungselemente werden insbesondere für Schutzabdeckungen von Führungsbahnen von Werkzeugmaschinen verwendet. Entsprechende Abdeckungen sind zum Beispiel aus DE 202 20 812 U1 und DE 20 2006 006 421 U1 bekannt. Die Schutzabdeckungen sind dabei aus einzelnen Segmenten zusammengesetzt, welche aus Stahllamellen, deren Führungsflächen in Vorschubrichtung der Schutzabdeckung orientiert sind, gebildet werden, an denen zum Schutz gegen umher fliegende Späne Schutzelemente angebracht oder ausgebildet sind, die die Schutzabdeckung verschließen. Die Segmente sind untereinander mit Verbindungselementen verbunden, welche die Schutzabdeckung in Auszugrichtung zusammenhalten.

In DE 202 20 812 U1 sind hierzu Blattfederelemente vorgesehen, welche jeweils zwischen zwei benachbarte Segmente der Schutzabdeckung eingebracht sind und dafür sorgen, daß die einzelnen Segmente beim Zusammenziehen der Schutzabdeckung entsprechend gedämpft und beim Auseinanderziehen der Schutzabdeckung unterstützt werden.

In DE 20 2006 006 421 U1 ist ein Verbindungselement beschrieben, welches parallelogrammförmig mit zwei über zwei Verbindungsschenkel verbundenen, an den Führungsflächen der Segmente der Schutzabdeckung einzusteckenden Befestigungsseiten ausgebildet ist. Dieses Verbindungselement ist elastisch ausgebildet und kann zur Schnellverbindung zweier Schutzabdeckungssegmente eingesetzt werden. Nachteilig an dieser Art der Ausgestaltung ist zum einen, daß diese Art Verbindungselement nur im Spritzgußverfahren hergestellt werden kann, was in puncto Herstellungskosten sehr aufwendig ist und kaum Variabilität in der Gestaltung, insbesondere der Abmessung des Verbindungselements, ermöglicht, da für jede Ausführungsform in Prinzip ein neues Spritzgießwerkzeug hergestellt werden muß.

Zudem sind zur Verbindung der Segmente einer Schutzabdeckung in der Regel zusätzliche Stabilisierungselemente erforderlich, die für die nötige Quer- und Längsstabilisierung sorgen.

Aufgabe der vorliegenden Erfindung ist es daher, ein Verbindungselement anzugeben, welches günstig herzustellen ist, eine funktionale Verbindung der Schutzabdekkungssegmente gewährleistet, die Funktion der Auszugsbegrenzung integriert und ein schnelles Entfernen, Austauschen oder Hinzufügen von Schutzabdeckungssegmenten zu einer Schutzabdeckung ermöglicht.

Gelöst wird diese Aufgabe durch ein Verbindungselement mit den Merkmalen des Anspruchs 1 bzw. eine Schutzabdekkung mit den Merkmalen des Anspruchs 12. Vorteilhafte Ausführungsformen finden sich in den Unteransprüchen.

Das erfindungsgemäße Verbindungselement läßt sich aus einem flachen Zuschnitt herstellen, wobei die Enden der Befestigungsabschnitte so zusammengeführt werden können, daß die Befestigungsabschnitte eine Art Blattfederelement bilden, in dessen Mitte das Kopplungselement vorgesehen ist, welches die Befestigungsabschnitte auseinander hält. Das Kopplungselement ist dabei vorzugsweise so ausgelegt, daß es beim Zusammenführen der Enden der Befestigungsabschnitte zusammengedrückt wird und so eine Spannung aufbaut, welche zu einem Auseinanderdrücken der Befestigungsabschnitte führt.

Bevorzugt ist das Verbindungselement mit Befestigungsausnehmungen bzw. Befestigungselementen versehen, die eine Schnellmontage am zugehörigen Segment der Schutzabdeckung ermöglichen.

Das erfindungsgemäße Verbindungselement wirkt zudem durch das Kopplungselement längsstabilisierend auf die Segmente der Schutzabdeckung und ist aufgrund des bevorzugt spiegelsymmetrischen Aufbaus platzsparend anzubringen.

Die Erfindung wird nachfolgend anhand der Zeichnungen in den Figuren 1A bis 4C schematisch näher erläutert.
- Figur 1A -zeigt: eine Draufsicht auf einen Zuschnitt zur Herstellung des erfindungsgemäßen Verbindungselements,
- Figur 1B: -zeigt ein erfindungsgemäßes Element in perspektivischer Ansicht,
- Figur 2A -zeigt: die Verbindung des erfindungsgemäßen Verbindungselements mit Segmenten einer Schutzabdeckung in perspektivischer Ansicht,
- Figur 2B - zeigt: die Verbindung des erfindungsgemäßen Verbindungselements mit Segmenten einer Schutzabdeckung in seitlicher Ansicht,
- Figur 2C -zeigt: mittels des Verbindungselements verbundene Segmente einer Schutzabdeckung,
- Figur 3A: -zeigt eine perspektivische Ansicht einer zweiten Ausführungsform des erfindungsgemäßen Verbindungselements,
- Figur 3B -zeigt: eine perspektivische Ansicht von mit dem Verbindungselement gemäß Figur 3A zusammengesetzten Segmenten einer Schutzabdekkung,
- Figur 4A: -zeigt eine perspektivische Ansicht einer dritten Ausführungsform des erfindungsgemäßen Verbindungselements,
- Figur 4B: -zeigt die Anbringung des in Figur 4A gezeigten Verbindungselements an dem Segment einer Schutzabdeckung in seitlicher Schnittansicht,
- Figur 4C: -zeigt die Anbringung des in Figur 4A gezeigten Verbindungselements an dem Segment einer Schutzabdeckung in perspektivischer Ansicht.

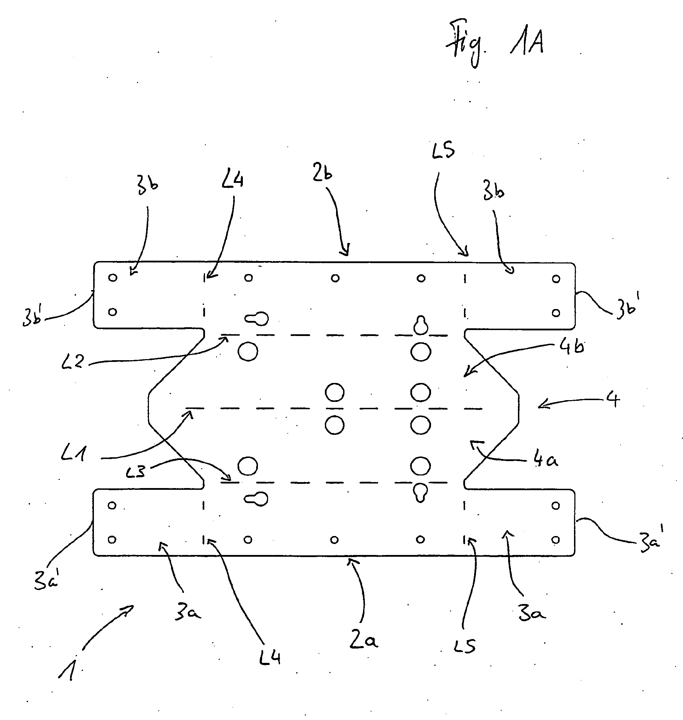

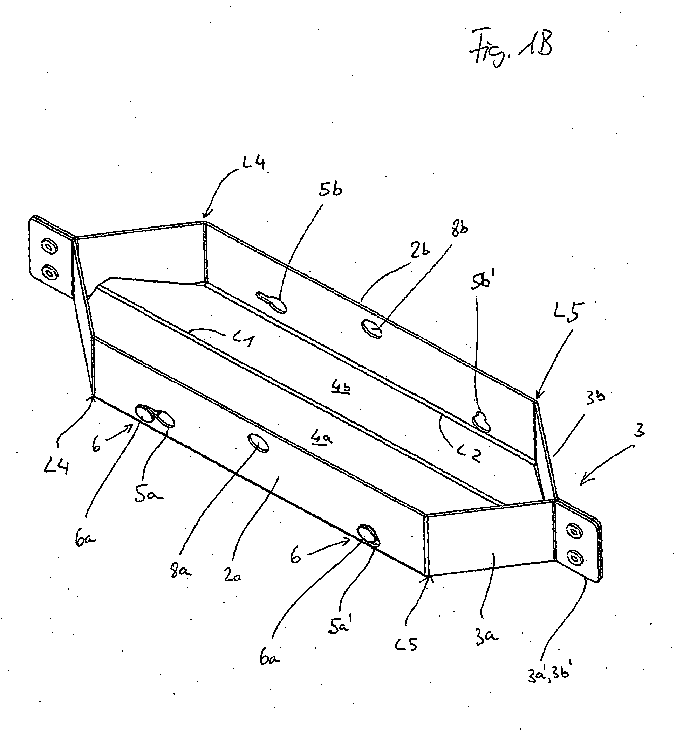

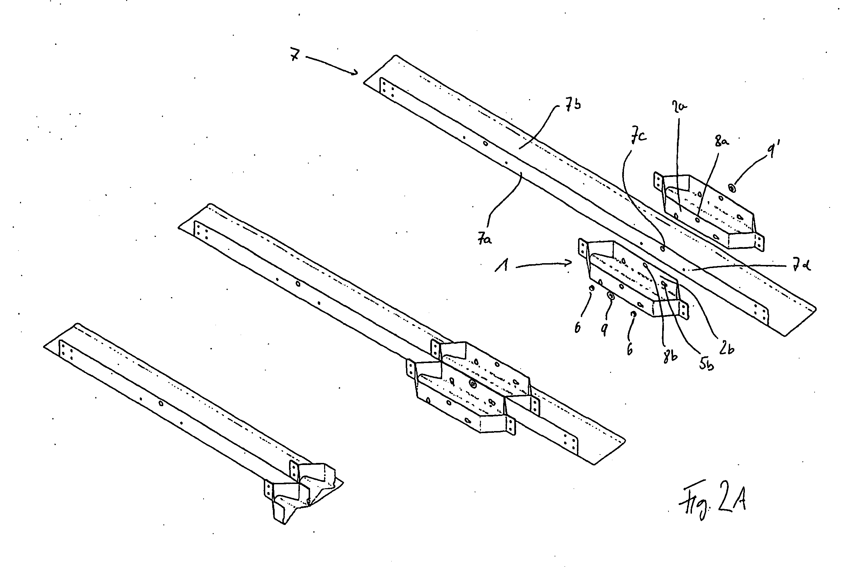

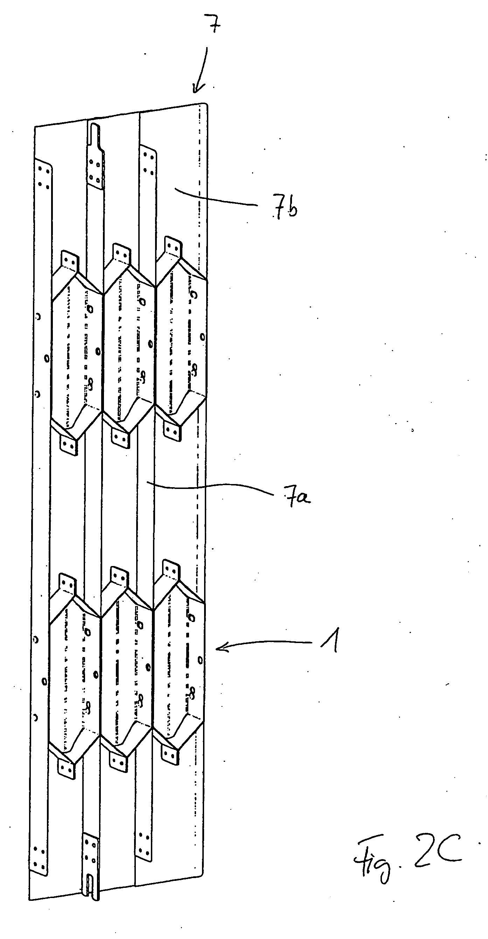

Das erfindungsgemäße Verbindungselement 1 ist gemäß der in den Figuren 1A und 1B gezeigten Ausführungsform wie folgt aufgebaut: Es besteht im gezeigten Beispiel aus einem flachen Zuschnitt, welcher bevorzugt aus Kunststoff mit guten elastischen Eigenschaften, wie z.B. aus PP besteht. So kann das Verbindungselement kostensparend aus einem Ausgangsmaterial ausgestanzt oder ausgeschnitten werden. Der Zuschnitt bzw. das Verbindungselement weist zwei Befestigungsabschnitte 2a, 2b auf, welche zur Befestigung an je einem Segment einer Schutzabdeckung ausgelegt sind (vgl. Figuren 2A bis 2C).

Die Befestigungsabschnitte 2a, 2b sind über ein Kopplungselement 4, welches bevorzugt in zwei Kopplungsbereiche 4a, 4b unterteilt ist, gekoppelt. Das Kopplungselement 4 grenzt entlang der Linien L2 bzw. L3 an jeweils einen Befestigungsabschnitt 2b, 2a an, die Kopplungsabschnitte 4a, 4b grenzen entlang der Line L1 aneinander an. In Fortsetzung der Befestigungsabschnitte 2a, 2b sind Endabschnitte 3a, 3b mit den jeweiligen nach außen weisenden Enden 3a', 3b' vorgesehen. Die Endabschnitte grenzen an den jeweiligen Befestigungsabschnitt entlang der Linien L4 und L5 an. Bevorzugt sind die genannten Linien L1 bis L5 Faltlinien, entlang derer sich die jeweils aneinander angrenzenden Bereiche gegeneinander abwinkeln lassen.

Dies ist beispielhaft in der Figur 1B gezeigt. Die Enden 3a', 3b'zweier gegenüberliegender Endabschnitte 3a, 3b lassen sich zu einem Endbereich 3 zusammenführen, so daß die Befestigungsabschnitte 2a, 2b parallel zueinander stehen. Das Kopplungselement wird dabei entlang der Linien L1 bis L3 geknickt und erhält somit eine Spannung, welche zum einen dafür sorgt, daß die Befestigungsabschnitte voneinander beabstandet bleiben; zum anderen wird die so entstandene, aus den Befestigungsabschnitten entstandene Blattfeder in Längsrichtung (in Richtung der Linien L1, L2 oder L3) stabilisiert. Das Verbindungselement 1 ist spiegelsymmetrisch aufgebaut zu einer Ebene, welche durch die zusammengeführten Endabschnitte 3a, 3b zu den Endbereichen 3 gebildeten Verbindungsebenen bzw. Verbindungslinien definiert ist.

Das so entstandene Verbindungselement 1 ist also nicht nur in der Lage, in Vorschubrichtung der Führungsflächen einer Schutzabdeckung für die nötige Dämpfung/Spreizung zu sorgen, sondern wirkt außerdem als Längsstabilisator der einzelnen Segmente einer Schutzabdeckung gegeneinander, da Scherbewegungen der Befestigungsabschnitte 2a, 2b aufgrund des erfindungsgemäß ausgestalteten Kopplungselements 4 nicht möglich sind oder weitestgehend unterdrückt werden. Bei maximaler Spreizung des Elements drücken die angeschrägten Enden des Kopplungselements 4 von innen gegen die Endbereiche 3, wodurch eine weitere Spreizung begrenzt wird (Auszugsbegrenzung). Das Vorsehen anderer Verbindungsteile zwischen den Segmenten einer Schutzabdeckung ist daher nicht mehr nötig, was die Handhabung bei der Montage flexibler und einfacher macht.

Zur Befestigung der Befestigungsabschnitte 2a, 2b an den Segmenten der Schutzabdeckung, die anhand der Figuren 2A bis 2C nun näher erläutert werden soll, sind Aufnahmen 5a, 5a' bzw. 5b, 5b' sowie 8a, 8b (oder auch Befestigungselemente 6) in den Befestigungsabschnitten 2a, 2b vorgesehen.

In den Figuren 2A bis 2C ist die Befestigung der Verbindungselemente an dem Segmenten 7 einer Schutzabdeckung veranschaulicht. Die Segmente 7 bestehen aus einem als Führungsfläche dienenden ersten Element 7a und einem etwa senkrecht hierzu angeordneten Schutzelement 7b. In den ersten Elementen sind Aufnahmen 7d, 7c vorgesehen, welche mit entsprechenden Aufnahmen 8b bzw. 5b, 5b' (vgl. Figur 1B) zur Deckung gebracht werden. Durch die Aufnahmen 5a, 5b bzw. 5a', 5b' werden Befestigungselemente 6 geführt, welche so ausgebildet sind, daß sie die Befestigungsabschnitte 2a, 2b hintergreifen können. Hierzu sind die Aufnahmen 5a, 5b bzw. 5a', 5b' mit einem breiten Abschnitt und einem an den breiten Abschnitt angrenzenden schmalen Abschnitt ausgebildet, wobei die Enden (Kopfenden 6a) der Befestigungselemente 6 breiter als dieser schmale Abschnitt sind. Bevorzugt ist das Befestigungselement 6 in Form eines Doppelknopfes mit zwei breiten Köpfen und einem im Querschnitt schmaleren Verbindungsstück ausgebildet. Im gezeigten Beispiel befinden sich je zwei solcher Aufnahmen an einem Befestigungsabschnitt 2a, 2b, wobei der schmale Abschnitt einmal über dem breiten Abschnitt und einmal rechts neben dem breiten Abschnitt angeordnet ist, so daß zur Fixierung des Verbindungselements 1 am ersten Element 7a auf ein Befestigungselement 6 eine Kraft in Längsrichtung und auf das andere Befestigungselement 6 eine Kraft in Querrichtung des Segments 7 ausgeübt werden muß, um für das Hintergreifen des Befestigungselements 6 hinter den jeweiligen schmalen Abschnitt der Aufnahmen 5a, 5b bzw. 5a', 5b' zu sorgen. Hierdurch wird auch gewährleistet, daß einseitige, auf die Abdeckung wirkende Kräfte nicht zu einer Lösung der Verbindung führen.

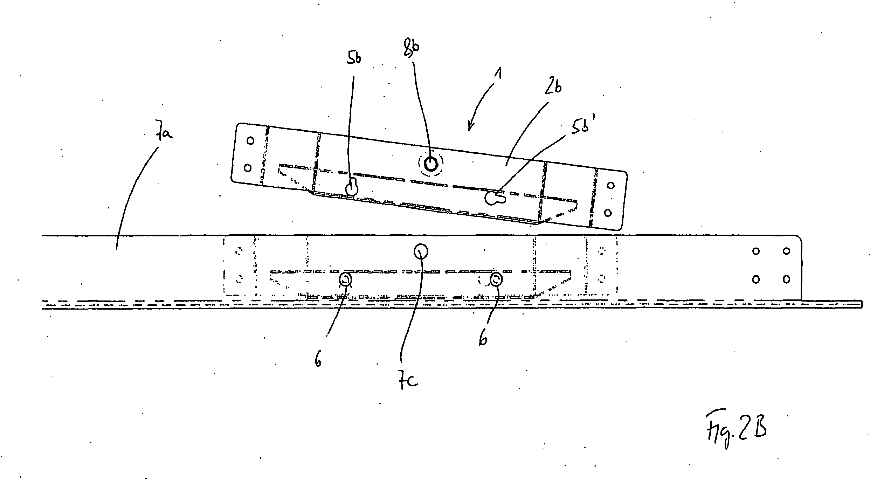

Die Befestigung ist in der Zeichnung der Figur 2B genauer gezeigt. Zur Sicherung der lösbaren Verbindung des Segments 7 in den Aufnahmen 5a, 5b bzw. 5a', 5b' ist eine weitere Ausnehmung 7c im Segment 7 bzw. 8b im angrenzenden Verbindungselement vorzusehen, durch welche ein die beiden Teile verbindendes Sicherungselement 9, 9' (vgl. Figur 2A) geführt wird.

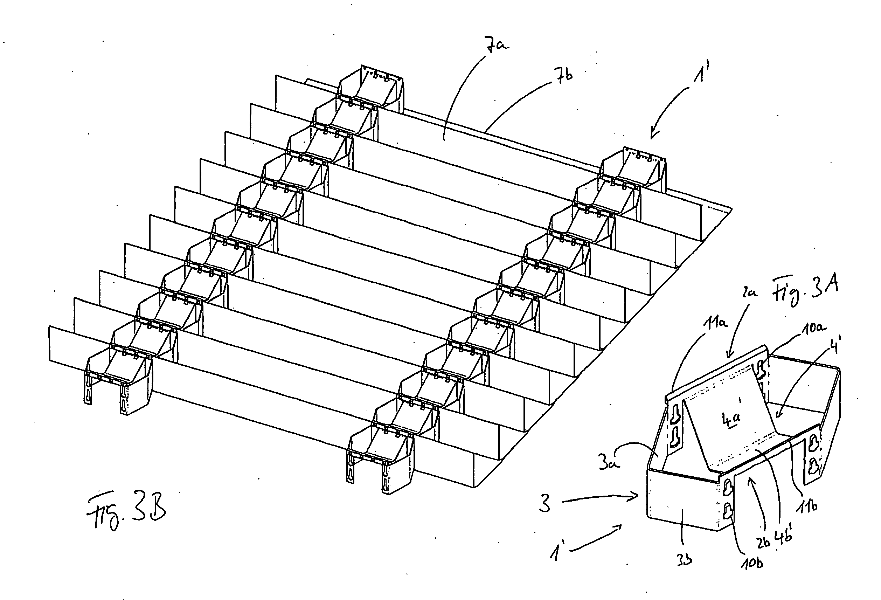

In den Figuren 3A und 3B ist eine zweite Ausführungsform des Verbindungselements 1' gezeigt. Im Gegensatz zur oben beschriebenen ersten Ausführungsform, sind die zum Endbereich 3 zusammengeführten Endabschnitte 3a, 3b hier einstückig ausgebildet. Das Kopplungselement 4' mit seinen Kopplungsbereichen 4a' 4b' entspricht im wesentlichen dem der ersten Ausführungsform. Zur Befestigung an den Segmenten 7 der Abdeckung sind aus den Befestigungsabschnitten 2b bzw. 2a vorspringende Befestigungselemente 10b und Befestigungsaufnahmen 10a vorgesehen. Diese dienen der jeweiligen Befestigung eines benachbarten Verbindungselements 1'. Ebenfalls sind Übergriffselemente 11a und entsprechende Gegenstücke 11b an den Befestigungsabschnitten 2a bzw. 2b zum Zusammenwirken mit einem benachbarten Verbindungselement 1' vorgesehen.

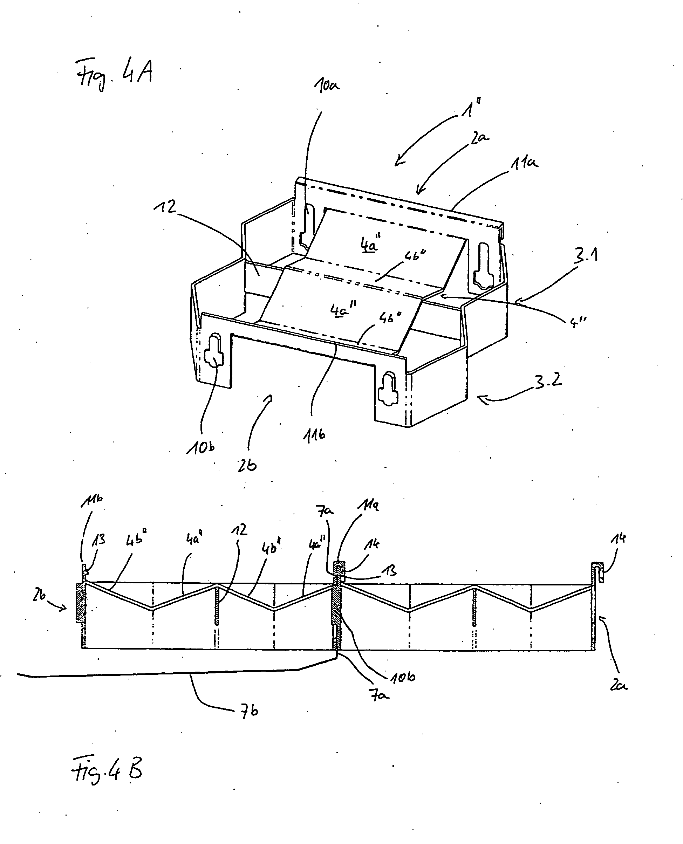

Diese Verbindung benachbarter Verbindungselemente 1' wird nachfolgend anhand der dritten Ausführungsform des erfindungsgemäßen Verbindungselements erläutert, welches in den Figuren 4A bis 4C dargestellt ist.

Im Gegensatz zur zweiten Ausführungsform sind an einem Längsende des Verbindungselements 1" zwei Endbereiche 3.1, 3.2 vorgesehen, welche entlang eines mittig zwischen den Befestigungsabschnitten 2a, 2b verlaufenden Steges 12 miteinander verbunden sind. Das Kopplungselement 4" besteht gegenüber der vorherigen Ausführungsform aus der doppelten Anzahl Kopplungsbereiche 4a", 4b", so daß das Verbindungselement 1" wie zwei miteinander kombinierte Verbindungselemente 1' der zweiten Ausführungsform aufgebaut ist.

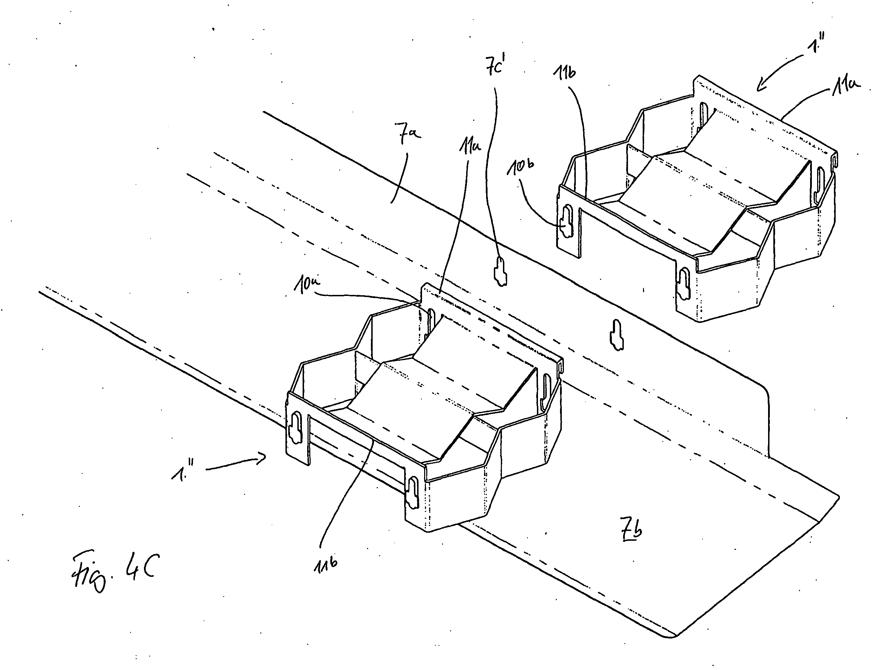

Die Anbringung des Verbindungselements 1' bzw. 1" ist in den Figuren 4B und 4C deutlicher gezeigt. Beiderseits einer Führungsfläche 7a der Abdeckung werden Verbindungselemente 1" (entsprechend gilt die folgende Erläuterung auch für das Verbindungselement 1') angesetzt, so daß ein Befestigungsvorsprung 10b des einen Verbindungselements 1" in die gegenüberliegende Ausnehmung 10a des anderen Verbindungselements 1" eingreift, wobei die Befestigungsvorsprünge 10b dazu ausgelegt sind, einen Bereich der Ausnehmung 10a zu hintergreifen. An der Oberseite übergreift das Übergriffselement 11a das entsprechende Gegenstück 11b des anderen Verbindungselements, so daß das Element 7a des Abdeckungssegments 7 ebenfalls vom Übergriffselement 11a übergriffen wird und zwischen den beiden Verbindungselementen 1" liegt. Optional können noch Einschnappvorrichtungen am Übergriffselement 11a bzw. dem Gegenstück 11b vorgesehen sein, um einen besonders sicheren Halt zu gewährleisten bzw. als Sicherung zu dienen. Hierzu weisen das Gegenstück 11b bevorzugt eine Rastnase 13 und das Übergriffselement 11a eine Rastausnehmung 14 auf. Beim Montieren der Verbindungselemente 1" greift die Rastnase 13 durch die Rastausnehmung 14 des Übergriffselements 11a hindurch und schnappt in dieser ein.

Die gezeigten Verbindungselemente bieten eine einfache Möglichkeit, Schutzabdeckungen mit einzelnen Segmenten zu erweitern bzw. einzelne Verbindungselemente nach Beschädigung auszutauschen.

## Patentansprüche

1. Verbindungselement zum Verbinden von Segmenten (7) einer Schutzabdeckung, insbesondere einer Schutzabdeckung von Führungsbahnen von Werkzeugmaschinen, mit zwei parallel und gegenüberliegend angeordneten Befestigungsabschnitten (2a, 2b) zur Befestigung an je einem Segment (7) einer Schutzabdeckung, wobei in Fortsetzung der Befestigungsabschnitte (2a, 2b) Endabschnitte (3a, 3b) vorgesehen sind, wobei die gegenüberliegenden Endabschnitte (3a) des einen Befestigungsabschnitts (2a) und des jeweils anderen Befestigungsabschnitts (2b) zu einem Endbereich (3) zusammenführbar oder zusammengeführt sind,
**dadurch gekennzeichnet,**
**dass** die Befestigungsabschnitte (2a, 2b) über einen an diese angrenzenden Kopplungsabschnitt (4) miteinander so verbunden sind, dass dieser bei Zusammenführen der Endabschnitte (3a, 3b) zu den Endbereichen (3) zwischen diesen angeordnet ist und dabei die Befestigungsabschnitte (2a, 2b) beabstandet hält, wobei der Kopplungsabschnitt (4) wenigstens zwei entlang einer ersten Linie (L1) gegeneinander abgewinkelte oder abwinkelbare Kopplungsbereiche (4a, 4a', 4a"; 4b, 4b', 4b") aufweist.

2. Verbindungselement nach Anspruch 1,
**dadurch gekennzeichnet,**
**daß** wenigstens ein erster Kopplungsbereich (4a, 4a', 4a") entlang einer zweiten Linie (L2) von einem Befestigungsabschnitt (2a) abwinkelbar oder abgewinkelt ist und wenigstens ein Kopplungsbereich (4b, 4b', 4b") entlang einer dritten Linie (L2) von dem anderen Befestigungsabschnitt (2b) abwinkelbar oder abgewinkelt ist.

3. Verbindungselement nach einem der vorherigen Ansprüche,
**dadurch gekennzeichnet,**
**daß** es einstückig ausgebildet ist.

4. Verbindungselement nach einem der vorherigen Ansprüche,
**dadurch gekennzeichnet,**
**daß** an den Befestigungsabschnitten (2a, 2b) Befestigungselemente (10b) erste (8a, 8b, 10a) und/oder zweite Befestigungsausnehmungen (5a, 5a', 5b, 5b') vorgesehen sind.

5. Verbindungselement nach Anspruch 4,
**dadurch gekennzeichnet,**
**daß** die Befestigungselemente (10b) bzw. die ersten Befestigungsausnehmungen (8a, 8b, 10a) zum Zusammenwirken mit den entsprechenden Befestigungselementen (10b) bzw. Befestigungsausnehmungen (8a, 8b, 10a) eines anderen Verbindungselements ausgelegt sind.

6. Verbindungselement nach Anspruch 4 oder 5,
**dadurch gekennzeichnet,**
**daß** die zweiten Befestigungsausnehmungen (5a, 5a', 5b, 5b') zur Verbindung mit dem Segment (7) einer Schutzabdeckung ausgelegt sind.

7. Verbindungselement nach Anspruch 6,
**dadurch gekennzeichnet,**
**daß** die Befestigungsausnehmungen (5a, 5a', 5b, 5b') einen breiteren Durchführungsbereich und einen schmaleren Fixierbereich zur Aufnahme eines am Segment (7) einer Schutzabdeckung angebrachten oder ausgebildeten Eingriffselements (6) aufweisen.

8. Verbindungselement nach einem der vorherigen Ansprüche,
**dadurch gekennzeichnet,**
**daß** am Kopplungselement (4) ein etwa parallel zu und zwischen den Befestigungsabschnitten (2a, 2b) verlaufender Steg (12) anschließt, welcher mit den Endbereichen (3) verbunden ist.

9. Verbindungselement nach einem der vorherigen Ansprüche,
**dadurch gekennzeichnet,**
**daß** das Kopplungselement (4) wenigstens einen sich zum Endbereich (3) hin verjüngenden Teil aufweist.

10. Verbindungselement nach einem der vorherigen Ansprüche,
**dadurch gekennzeichnet,**
**daß** die Befestigungsabschnitte (2a)) bzw. (2b) und die Kopplungsbereiche (4a, 4a', 4a") bzw. (4b, 4b', 4b") des Kopplungsabschnitts (4) zu einer Ebene spiegelsymmetrisch angeordnet sind, welche durch die Verbindungslinien oder Verbindungsflächen der zu den Endbereichen (3) zusammengeführten Endabschnitte (3a, 3b) definiert ist.

11. Schutzabdeckung mit einer Mehrzahl von parallel angeordneten, gegeneinander quer zu ihrer Längserstreckung verschieblichen Segmenten (7), welche jeweils aus senkrecht zur Vorschubrichtung sich erstreckenden ersten Elementen (7a) und hierzu abgewinkelten zweiten Schutzelementen (7b) aufgebaut sind, wobei jeweils zwei benachbarte Segmente über wenigstens ein Verbindungselement nach einem der vorherigen Ansprüche miteinander gekoppelt sind.

12. Schutzabdeckung nach Anspruch 11,
**dadurch gekennzeichnet,**
**daß** zur Verbindung des Verbindungselementes (1) mit einem der ersten Elemente (7a) Eingriffselemente (6) vorgesehen sind, welche durch eine Befestigungsausnehmung (5a, 5a', 5b, 5b') des Verbindungselements (1) hindurch einen der Befestigungsabschnitte (2a, 2b) hintergreifen.

13. Schutzabdeckung nach Anspruch 12,
**dadurch gekennzeichnet,**
**daß** in den ersten Elementen (7a) den Befestigungsausnehmungen (5a, 5a', 5b, 5b') zugeordnete Ausnehmungen vorgesehen sind, durch welche die Befestigungselemente (6) hindurchtreten und die ersten Elemente (7a) auf der dem entsprechenden Verbindungselement (1) abgewandten Seite hintergreifen.

14. Schutzabdeckung nach einem der Ansprüche 11 bis 13,
**dadurch gekennzeichnet,**
**daß** die Befestigungselemente (6) zwei gegenüberliegende Kopfabschnitte (6a) und einen die Kopfabschnitte (6a) verbindenden, im Durchmesser kleineren Zwischenabschnitt aufweisen.

15. Schutzabdeckung nach Anspruch 14,
**dadurch gekennzeichnet,**
**daß** das Befestigungselement (6) eine Doppelknopfform aufweist.

16. Schutzabdeckung nach einem der Ansprüche 11 bis 15,
**dadurch gekennzeichnet,**
**daß** die über das Befestigungselement (6) bewirkte Verbindung der Segmente (7) und des Verbindungselements (1) lösbar ist.

17. Schutzabdeckung nach Anspruch 16,
**dadurch gekennzeichnet,**
**daß** ein Sicherungselement (9) vorgesehen ist, welches so ausgelegt ist, daß es ein unbeabsichtigtes Lösen der Verbindung zwischen einem Segment (7) und einem Verbindungselement (1) verhindert.

## Claims

1. Connecting element for connecting segments (7) of a protective cover, more particularly a protective cover for guideways of machine tools, with two fastening sections (2a, 2b) mounted parallel opposite one another each for fastening a segment (7) of a protective cover wherein in a continuation of the fastening sections (2a, 2b) there are end sections (3a, 3b) wherein the opposing end sections (3a) of the one fastening section (2a) and of the relevant other fastening section (2b) are or can be brought together into one end region (3),
**characterised in that** the fastening sections (2a, 2b) are connected to one another by a coupling section (4) adjoining same so that on drawing together the end sections (3a, 3b) into the end areas (3) the coupling section is arranged between the latter and thereby holds the fastening sections (2a, 2b) spaced apart wherein the coupling section (4) has at least two coupling areas (4a, 4a', 4a"; 4b, 4b', 4b") which are or can be angled against one another along a first line (L1).

2. Connecting element according to claim 1 **characterised in that** at least one first coupling area (4a, 4a', 4a") is or can be angled from one fastening section (2a) along a second line (L2) and at least one coupling area (4b, 4b', 4b") is or can be angled from the other fastening section (2b) along a third line (L2).

3. Connecting element according to one of the preceding claims **characterised in that** it is formed in one piece.

4. Connecting element according to one of the preceding claims **characterised in that** fastening elements (10b), first (8a, 8b, 10a) and/or second (5a, 5a', 5b, 5b') fastening recesses are provided on the fastening sections (2a, 2b).

5. Connecting element according to claim 4 **characterised in that** the fastening elements (10b) and the first fastening recesses (8a, 8b, 10a) respectively are designed to interact with the corresponding fastening elements (10b) and fastening recesses (8a, 8b, 12a) respectively of another connecting element.

6. Connecting element according to claim 4 or 5 **characterised in that** the second fastening recesses (5a, 5a', 5b, 5b') are designed to connect with the segment (7) of a protective cover.

7. Connecting element according to claim 6 **characterised in that** the fastening recesses (5a, 5a', 5b, 5b') have a wider guide-through area and a narrower fixing area to receive an engagement element (6) formed or fitted on the segment (7) of a protective cover.

8. Connecting element according to one of the preceding claims **characterised in that** the coupling element (4) is adjoined by a web (12) which runs roughly parallel to and between the fastening sections (2a, 2b) and which is connected to the end areas (3).

9. Connecting element according to one of the preceding claims **characterised in that** the coupling element (4) has at least one part which tapers towards the end area (3).

10. Connecting element according to one of the preceding claims **characterised in that** the fastenings sections (2a) and (2b) respectively and the coupling areas (4a, 4a', 4a") and (4b, 4b', 4b") respectively of the coupling section (4) are disposed mirror symmetrically to a plane which is defined by the connecting lines or connecting surfaces of the end sections (3a, 3b) which are brought together into the end areas (3).

11. Protective cover with a number of segments (7) which are arranged parallel and displaceable opposite one another transversely to their longitudinal extension and which are each comprised of first elements (7a) extending perpendicular to the feed direction and of second protective elements (7b) angled relative thereto, wherein each two adjoining segments are coupled to one another by at least one connecting element according to one of the preceding claims.

12. Protective cover according to claim 11 **characterised in that** to connect the connecting element (1) to one of the first elements (7a) there are engagement elements (6) which engage through a fastening recess (5a, 5a', 5b, 5b') of the connecting element (1) and behind one of the fastening sections (2a, 2b).

13. Protective cover according to claim 12 **characterised in that** in the first elements (7a) there are recesses associated with the fastening recesses (5a, 5a', 5b, 5b') and through which the fastening elements (6) pass and engage behind the first elements (7a) on the side remote from the corresponding connecting element (1).

14. Protective cover according to one of claims 11 to 13 **characterised in that** the fastening elements (6) have two opposing head sections (6a) and an intermediate section of smaller diameter which connects the head sections (6a).

15. Protective cover according to claim 14 **characterised in that** the fastening element (6) has a double stud shape.

16. Protective cover according to one of claims 11 to 15 **characterised in that** the connection of the segments (7) and connecting element (1) which is undertaken by the fastening element (6) is releasable.

17. Protective cover according to claim 16 **characterised in that** a securing element (9) is provided which is designed so that it prevents unintended release of the connection between a segment (7) and a connecting element (1).

## Revendications

1. Elément de raccordement pour le raccordement de segments (7) d'un revêtement de protection, particulièrement d'un revêtement de protection de glissières de guidage de machines-outils, avec deux sections de fixation (2a, 2b), disposées parallèlement et vis-à-vis, qui sont destinées à être fixées chacune à un segment (7) d'un revêtement de protection, des sections d'extrémité (3a, 3b) étant prévues en prolongement des sections de fixation (2a, 2b), les sections d'extrémité (3a) opposées de l'une (2a) des sections de fixation et de l'autre (2b) section de fixation correspondante pouvant être réunies ou étant réunies en une section finale (3),
**caractérisé en ce que** les sections de fixations (2a, 2b) sont reliées ensemble par l'intermédiaire d'une section de couplage (4) y adjacente, de sorte que cette dernière, lors de la réunion des sections d'extrémité (3a, 3b) en une section finale (3), est disposée entre celles-ci et maintient les sections de fixation (2a, 2b) distancées, la section de couplage (4) présentant au moins deux sections de couplage (4a, 4a', 4a"; 4b, 4b', 4b") pliées ou pouvant être pliées l'une par rapport à l'autre, le long d'une première ligne (L1).

2. Elément de raccordement selon la revendication 1,
**caractérisé en ce qu'**au moins une première section de couplage (4a, 4a', 4a") peut être pliée ou est pliée le long d'une deuxième ligne (L2), à partir d'une section de fixation (2a), et qu'au moins une section de couplage (4b, 4b', 4b") peut être pliée ou est pliée le long d'une troisième ligne (L3), à partir de l'autre section de fixation (2b).

3. Elément de raccordement selon l'une des revendications précédentes,
**caractérisé en ce qu'**il est formé d'une pièce.

4. Elément de raccordement selon l'une des revendications précédentes,
**caractérisé en ce que**, sur les sections de fixation (2a, 2b), sont prévus des éléments de fixation (10b), des premiers (8a, 8b, 10a) et / ou des deuxièmes évidements de fixation (5a, 5a', 5b, 5b').

5. Elément de raccordement selon la revendication 4,
**caractérisé en ce que** les éléments de fixation (10b), respectivement les premiers évidements de fixation (8a, 8b, 10a) sont conçus pour coopérer avec les éléments de fixation (10b), respectivement avec des évidements de fixation (8a, 8b, 10a) d'un autre élément de raccordement.

6. Elément de raccordement selon revendication 4 ou 5,
**caractérisé en ce que** les deuxièmes évidements de fixation (5a, 5a', 5b, 5b') sont conçus pour le raccordement au segment (7) d'un revêtement de protection.

7. Elément de raccordement selon la revendication 6,
**caractérisé en ce que** les évidements de fixation (5a, 5a', 5b, 5b') présentent une section de passage plus large et une section de fixation plus étroite pour la réception d'un élément d'accrochage (6), qui est rapporté ou formé sur le segment (7) d'un revêtement de protection.

8. Elément de raccordement selon l'une des revendications précédentes,
**caractérisé en ce qu'**à l'élément de couplage (4) est raccordée une patte (12), qui, s'étendant à peu près parallèlement aux sections de fixation (2a, 2b) et entre celles-ci, est reliée aux sections finales (3).

9. Elément de raccordement selon l'une des revendications précédentes,
**caractérisé en ce que** l'élément de couplage (4) présente au moins une partie s'amincissant vers la section finaleé (3).

10. Elément de raccordement selon l'une des revendications précédentes,
**caractérisé en ce que** les sections de fixation (2a), respectivement (2b), et les sections de couplage (4a, 4a', 4a"), respectivement (4b, 4b', 4b") de la section de couplage (4) sont disposées sur un plan de symétrie spéculaire, qui est défini par les lignes de liaison ou les surface de liaison des sections d'extrémité (3a, 3b) réunies dans les sections finales (3).

11. Revêtement de protection avec plusieurs segments (7), qui, disposés parallèlement, en pouvant être déplacés, les uns par rapport aux autres, perpendiculairement à leur extension longitudinale, sont respectivement constitués par des premiers éléments (7a) s'étendant perpendiculairement à la direction d'avance, et par des deuxièmes éléments de protection (7b), pliés par rapport à ceux-ci, deux segments voisins étant respectivement couplés ensemble par l'intermédiaire d'au moins un élément de raccordement selon l'une des revendications précédentes.

12. Revêtement de protection selon la revendication 11,
**caractérisé en ce que**, pour le raccordement de l'élément de raccordement (1) à l'un des premiers éléments (7a), sont prévus des éléments d'accrochage (6), qui s'accrochent derrière l'une des sections de fixation (2a, 2b), en passant à travers un évidement de fixation (5a, 5a', 5b, 5b') de l'élément de raccordement (1).

13. Revêtement de protection selon la revendication 12,
**caractérisé en ce que**, dans les premiers éléments (7a), sont prévus des évidements associés aux évidements de fixation (5a, 5a', 5b, 5b'), à travers lesquels passent les éléments de fixation (6) et qui s'accrochent derrière les premiers éléments (7a) sur le côté opposé à l'élément de raccordement (1) correspondant.

14. Revêtement de protection selon l'une des revendications 11 à 13,
**caractérisé en ce que** les éléments de fixation (6) présentent deux sections de tête (6a) opposées et une section intermédiaire de plus petit inférieur, qui relie les sections de tête (6a).

15. Revêtement de protection selon la revendication 14,
**caractérisé en ce que** l'élément de fixation (6) présente la forme d'un double-bouton.

16. Revêtement de protection selon l'une des revendications 11 à 15,
**caractérisé en ce que** le raccordement des segments (7) et de l'élément de raccordement (1), réalisé par l'intermédiaire de l'élément de fixation est (6), est amovible.

17. Revêtement de protection selon la revendication 16,
**caractérisé en ce qu'**est prévu un élément de sécurité (9), qui est configuré de sorte à empêcher la de la liaison entre un segment (7) et un élément de raccordement (1).
